# FASCICULE DE BREVET EUROPEEN

(11) **EP 1 152 855 B1**
(45) Date de publication et mention de la délivrance du brevet: **25.09.2002**
(21) Numéro de dépôt: 00909390.7
(22) Date de dépôt: 18.02.2000
(51) Int. Cl.: B22D 27/15, B22D 13/04, F27B 14/06, H05B 6/32, B22D 21/00

(54) **PROCEDE ET DISPOSITIF DE MOULAGE DE PIECES EN TITANE**
VERFAHREN UND VORRICHTUNG ZUM GIESSEN VON WERKSTÜCKEN AUS TITAN
METHOD AND DEVICE FOR MOULDING TITANIUM PARTS

(30) Priorité: 19.02.1999 FR 9902318
(43) Date de publication de la demande: 14.11.2001
(73) Titulaire: CENTRE NATIONAL DE LA RECHERCHE SCIENTIFIQUE, 75016 Paris Cédex (FR)
(72) Inventeur: GARNIER, Marcel, F-38410 Saint Martin d'Uriage (FR); GARNIER, Christian, 38320 Eybens (FR); ERNST, Roland, F-38610 Gières (FR)
(74) Mandataire: de Beaumont, Michel
(86) Numéro de dépôt international: FR0000420
(87) Numéro de publication internationale: WO00048771

(56) Documents cités:
- EP-A- 0 751 361
- DE-C- 19 639 514
- DE-U- 29 710 863
- GB-A- 1 186 806
- HAUZEUR F ET AL: "ADVANCES IN TITANIUM CASTING" FOUNDRY TRADE JOURNAL,GB,FMJ INTERNATIONAL PUBLICATIONS LTD., REDHILL, vol. 162, no. 3373, page 568,570,572 XP000204392 ISSN: 0015-9042
- PATENT ABSTRACTS OF JAPAN vol. 005, no. 039 (M-059), 14 mars 1981 (1981-03-14) & JP 55 165266 A (DENKI KOGYO KK), 23 décembre 1980 (1980-12-23)

## Description

La présente invention concerne un procédé et un appareil de moulage de pièces en un métal ou un mélange/alliage de métaux fortement réactifs, tels que le titane.

L'utilisation du titane a souvent été préconisée dans les domaines où l'on veut exploiter l'une et/ou l'autre de ses propriétés spécifiques. Par exemple, dans le domaine de l'aéronautique, on s'intéresse vivement au titane en raison de la valeur élevée du rapport charge de rupture sur masse volumique. Dans le domaine de la chimie, on s'intéresse au titane pour ses propriétés de faible réactivité avec certains matériaux. Également, le titane présente une bonne compatibilité biologique qui le rend apte à former des prothèses telles que des prothèses dentaires. Dans ces divers domaines, et notamment dans le dernier, on cherche souvent à réaliser des pièces de petites dimensions et de formes complexes mais le titane est un matériau très difficile à usiner et des essais d'adaptation directs des divers procédés connus de moulage conduisent à des pièces fortement oxydées dans la masse et/ou en surface.

Ainsi, la présente invention vise à prévoir un procédé de moulage du titane qui assure une bonne immunité à l'oxydation du titane pendant la phase de fusion et pendant la phase de moulage.

Pour atteindre cet objet, la présente invention prévoit un procédé de moulage de pièces en un métal ou un mélange de métaux très réactif, comprenant les étapes consistant à placer dans une enceinte sous vide un creuset froid à chauffage par induction contenant ledit métal ou ledit mélange et dont le fond comprend un bouchon amovible sectorisé, ce creuset étant conformé pour assurer la mise en lévitation dudit métal ou mélange à l'état fondu ; disposer dans l'enceinte, sous le creuset froid, un moule susceptible d'être entraîné en rotation autour d'un axe vertical ; disposer à l'extérieur de l'enceinte et à la hauteur du creuset et notamment du fond du creuset un enroulement de chauffage par induction ; exciter l'enroulement pour fondre ledit métal ou ledit mélange, le mettre en lévitation et le surchauffer d'au moins 50°C au-dessus de son point de fusion ; et ouvrir le bouchon pour que la lévitation cesse et que ledit métal ou ledit mélange fondu surchauffé s'écoule dans le moule en rotation et en remplisse les cavités.

Selon un mode de réalisation de la présente invention, le métal très réactif est du titane.

Selon un mode de réalisation de la présente invention, le moule est du type moule à la cire perdue.

Selon un mode de réalisation de la présente invention, les pièces moulées sont destinées à des applications orthopédiques.

Selon un mode de réalisation de la présente invention, les pièces en titane sont destinées à des applications dentaires.

La présente invention vise aussi un appareil pour la mise en oeuvre de ce procédé et les pièces obtenues par ce procédé.

Un avantage des pièces en titane obtenues par le procédé selon la présente invention est qu'elles ne sont pas oxydées dans la masse et présentent une couche d'oxyde en surface extrêmement faible, uniquement due à d'éventuelles réactions entre le moule et le titane en fusion ayant pénétré dans ce moule. On a obtenu des épaisseurs d'oxyde inférieures au micromètre alors que par les procédés classiques on obtient des épaisseurs supérieures à plusieurs dizaines de micromètres.

Ceci constitue un avantage important de la présente invention car on souhaite généralement livrer des pièces non oxydées en surface et ceci nécessite une opération de sablage, ou de polissage par un autre procédé, qui peut être longue et coûteuse si la couche d'oxyde et notamment d'anhydride de titane (TiO₂) est épaisse (d'une épaisseur supérieure à quelques µm).

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A et 1B représentent un four à induction classique fonctionnant en lévitation ; et
la figure 2 représente de façon schématique et partielle un équipement de fusion et de moulage de titane selon la présente invention.

Dans ce qui suit, la présente invention va être expliquée en relation avec la fusion et le moulage de titane. De façon plus générale, la présente invention s'applique à la fusion et au moulage de tout métal ou mélange de métaux fortement réactif.

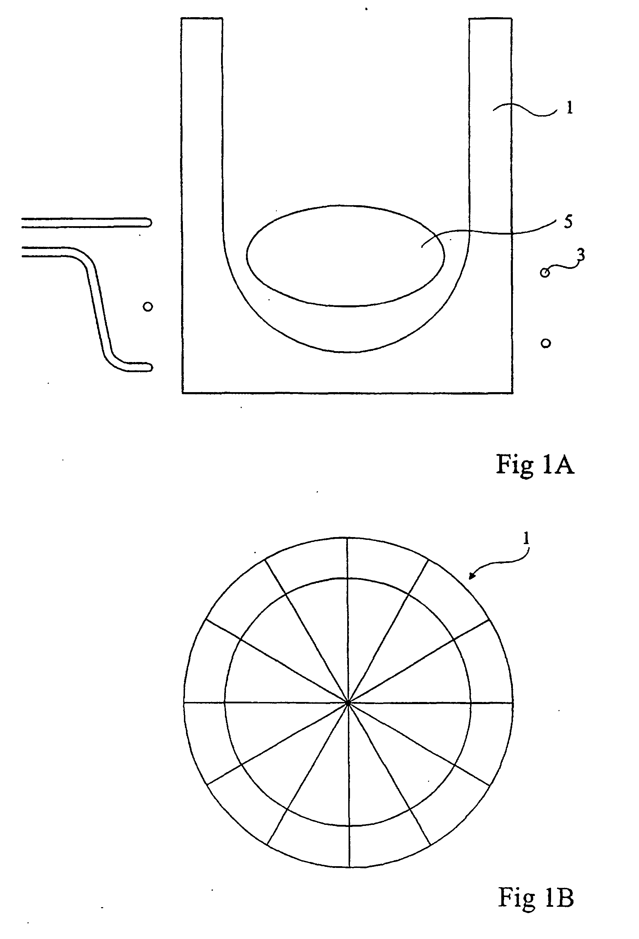

Pour réaliser la fusion de métal ou de mélange de métaux fortement réactif, on utilise couramment des dispositifs de type creuset froid à chauffage par induction et plus particulièrement des creusets susceptibles de fonctionner en lévitation. Un tel creuset est représenté en vue en coupe en figure 1A et en vue de dessus schématique en figure 1B. Le creuset 1 a un fond arrondi et, vu de dessus, est divisé en secteurs, chaque secteur étant en un matériau conducteur creux refroidi par une circulation de liquide et isolé électriquement des secteurs adjacents. Un enroulement 3 dans lequel circule un courant électrique haute fréquence assure le chauffage par induction et, du fait de la sectorisation et de la forme arrondie du fond du creuset, la mise en lévitation de la substance fondue 5.

L'utilisation d'un tel creuset est décrite dans la technique, par exemple, dans le brevet américain 5 058 127 dont les inventeurs sont Marcel Garnier, Isabelle Gleizes, Patrick Paillere et Pierre Vernay.

Ce brevet antérieur, dont certains des inventeurs sont communs avec des inventeurs de la présente demande, décrit plus particulièrement la réalisation d'un creuset comportant un fond sectorisé formant bouchon, permettant une ouverture simple et un écoulement rapide de la masse en lévitation, la lévitation disparaissant quand le fond est ouvert.

Ce brevet suggère notamment dans son deuxième exemple la fusion d'un mélange de titane et d'aluminium. Toutefois, ce brevet est muet sur l'utilisation d'un éventuel moule dans lequel on déverserait le matériau obtenu. En effet, dans ce brevet on s'intéresse à la lévitation essentiellement du fait qu'elle permet d'assurer un brassage dans des conditions de grande pureté pour obtenir un mélange/alliage homogène de plusieurs métaux.

D'autre part, ce brevet ne décrit pas comment sont disposés les enroulements inducteurs autour du creuset. On peut donc penser que ces enroulements sont disposés de façon classique, autour du creuset et le plus près possible du creuset.

La présente invention vise à utiliser un creuset à ouverture par le fond du type décrit dans le brevet ci-dessus référencé mais adapté à une opération de moulage après la fusion.

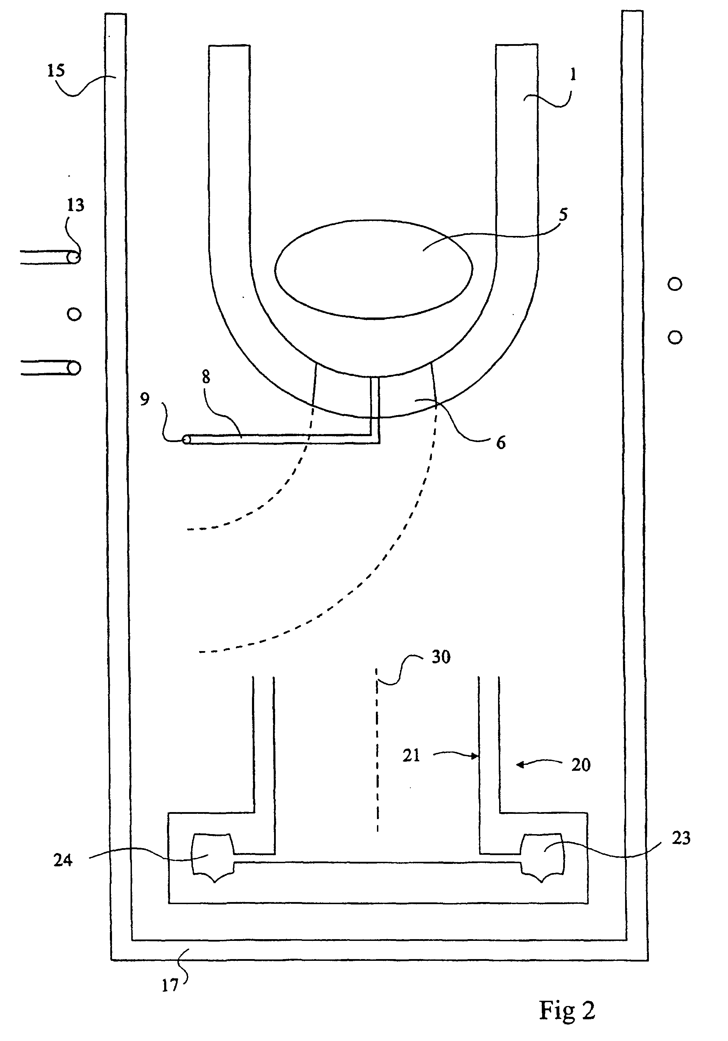

Pour cela, la présente invention prévoit un dispositif dont le schéma général est représenté de façon symbolique en figure 2. Dans cette figure, les moyens de support des divers éléments ne sont pas représentés mais pourront être facilement réalisés par l'homme de l'art.

On retrouve en figure 2 un creuset 1 du même type de celui illustré en figure 1A et 1B contenant une masse liquide 5 susceptible d'être mise en lévitation. Le fond 6 du creuset, conformément à l'enseignement du brevet américain 5 058 127, comporte un bouchon 6 sectorisé, refroidi et amovible. Le bouchon 6 est par exemple, solidaire d'un bras rotatif 8 articulé autour d'un axe 9. Le bras 8 est actionné par des moyens mécaniques, électromécaniques ou magnéto-mécaniques de façon à pouvoir basculer très rapidement. On notera que l'axe 9 est également lié à des moyens d'alimentation en eau (non représentés) pour refroidir le fond sectorisé 6. De même, des moyens d'alimentation en eau des secteurs du creuset 1 n'ont pas été représentés.

Selon la présente invention, des enroulements inducteurs 13 sont disposés à l'extérieur des parois verticales d'une enceinte 15. Ceci se différentie des montages classiques dans lesquels, comme cela est illustré en figure 1A, des enroulements 3 sont disposés immédiatement autour du creuset. L'enceinte 15 comprend un fond 17 et un couvercle (non représenté) qui peut y être relié par des joints de façon à pouvoir faire le vide. L'enceinte est reliée à des moyens d'évacuation destinés à y former un vide primaire. Ces moyens ne sont également pas représentés.

Les inventeurs ont constaté que, contrairement à un préjugé établi, le fait de disposer des enroulements 13 à l'extérieur des parois de l'enceinte 15 ne modifie pas la possibilité d'obtenir un chauffage par induction et une mise en lévitation de la masse 5. Tout au plus faut-il augmenter légèrement la puissance appliquée à l'enroulement. On notera que l'on connaissait des systèmes à induction dans lesquels un enroulement inducteur était disposé à l'extérieur d'une enceinte dans un but de chauffage (voir par exemple US-A-4609402) mais pas dans des systèmes à lévitation.

Le fait de disposer les enroulements à l'extérieur de l'enceinte présente plusieurs avantages.

Selon un premier avantage, il est inutile de prévoir des traversées de l'enceinte, ce qui est particulièrement économique, en particulier dans le cas ou l'enceinte est en quartz.

Selon un deuxième avantage, ceci évite des risques de création d'un plasma ou de claquages électriques. En effet, quand l'enroulement est disposé à l'intérieur de l'enceinte sous vide, il apparaît, notamment dans le cas où le métal à fondre est du titane une vaporisation très rapide de ce titane, d'où il résulte qu'il peut se créer un plasma réactif et qu'il existe de forts risques de courts-circuits entre les conducteurs de l'enroulement inducteur, à l'intérieur de l'enceinte. Pour résoudre ce problème on avait essayé dans l'art antérieur divers moyens pour protéger les enroulements, par exemple en les noyant dans un isolant. Toutefois ceci s'est avéré difficile à réaliser et souvent inefficace.

En outre, la présente invention prévoit de disposer sous l'orifice prévu dans le fond du creuset 1 un moule 20. Ce moule comporte un col cylindrique intérieur 21 de diamètre relativement élevé, pour assurer que quand le titane s'écoule par l'orifice 6, il pénètre entièrement dans le col. Le moule est de préférence un moule obtenu par la technique dite à la cire perdue et comprend divers évidements de formes calibrées dont deux 23 et 24 sont visibles dans la vue en coupe. L'ensemble du moule 20 est monté sur un dispositif non représenté d'entraînement en rotation et tourne relativement rapidement autour de l'axe 30 du dispositif. Ainsi, le titane en fusion pénètre dans les orifices 23, 24 et les remplit. Il ne se pose pas de problème d'évacuation d'air et d'oxydation puisque l'ensemble du système est sous vide. Ainsi, à la fin de l'opération, on retrouve simplement une couche mince de titane sur les parois internes du col 21 de l'enceinte et dans chacun des orifices de moulage 24.

Selon un aspect important de l'invention, avant d'ouvrir le bouchon 6 pour laisser s'écouler le titane dans le moule à la cire perdue 20, ce titane est surchauffé nettement au-dessus de sa température de fusion. Par exemple, si pour du titane pur la température de fusion est de l'ordre de 1660°C, le titane est de préférence chauffé à une température de l'ordre de 1700 à 1800°C. On évite ainsi tous les inconvénients qui seraient liés à un refroidissement prématuré lors d'un contact du titane en fusion avec le moule avant que ce titane ne remplisse complètement les cavités de moulage.

## Revendications

1. Procédé de moulage de pièces en un métal ou un mélange de métaux très réactif, **caractérisé en ce qu'**il comprend les étapes suivantes :
placer dans une enceinte sous vide (15) un creuset froid (1) à chauffage par induction contenant ledit métal ou ledit mélange et dont le fond comprend un bouchon amovible sectorisé (6), ce creuset étant conformé pour assurer la mise en lévitation dudit métal ou mélange à l'état fondu ;
disposer dans l'enceinte, sous le creuset froid, un moule (20) susceptible d'être entraîné en rotation autour d'un axe vertical (30) ;
disposer à l'extérieur de l'enceinte et à la hauteur du creuset et notamment du fond du creuset un enroulement (13) de chauffage par induction ;
exciter l'enroulement (13) pour fondre ledit métal ou ledit mélange, le mettre en lévitation et le surchauffer d'au moins 50°C au-dessus de son point de fusion ; et
ouvrir le bouchon (6) pour que la lévitation cesse et que ledit métal ou ledit mélange fondu surchauffé s'écoule dans le moule en rotation et en remplisse les cavités.

2. Procédé selon la revendication 1, **caractérisé en ce que** le métal très réactif est du titane.

3. Procédé selon la revendication 1 ou 2, **caractérisé en ce que** le moule est du type moule à la cire perdue.

4. Procédé selon l'une quelconque des revendications 1 à 3, **caractérisé en ce que** les pièces moulées sont destinées à des applications orthopédiques.

5. Procédé selon les revendications 2, 3 et 4, **caractérisé en ce que** les pièces en titane sont destinées à des applications dentaires.

6. Appareil de moulage de pièces en un métal ou un mélange de métaux très réactif, **caractérisé en ce qu'**il comprend :
- à l'intérieur d'une enceinte sous vide (15) :
un creuset froid à chauffage par induction (1) dont le fond comprend un bouchon amovible sectorisé (6), ce creuset étant conformé pour assurer la mise en lévitation dudit métal ou mélange à l'état fondu ;
un moule disposé sous le creuset ;
des moyens pour entraîner le moule en rotation ;
- à l'extérieur de l'enceinte :
un enroulement (13) disposé à la hauteur de la partie basse du creuset froid et destiné à chauffer par induction ledit métal ou ledit mélange.

7. Appareil selon la revendication 6, **caractérisé en ce que** le métal très réactif est du titane.

8. Appareil selon la revendication 6 ou 7, **caractérisé en ce que** le moule est du type moule à la cire perdue.

9. Appareil selon l'une quelconque des revendications 6 à 8, **caractérisé en ce que** les pièces moulées sont destinées à des applications orthopédiques.

10. Appareil selon les revendications 7, 8 et 9, **caractérisé en ce que** les pièces en titane sont destinées à des applications dentaires.

## Claims

1. A method for casting pieces of a very reactive metal or metal mixture, **characterized in that** it includes the steps of:
placing in a vacuum chamber (15) a cold induction-heated crucible (1) containing said metal or said mixture and the bottom of which includes a removable sectorized plug (6), this crucible being designed to ensure the levitating of said metal or mixture in the molten state;
arranging in the chamber, under the cold crucible, a mould (20) likely to be rotated around a vertical axis (30);
arranging outside of the chamber at the level of the crucible and especially of the crucible bottom an induction heating winding (13);
exciting the winding (13) to melt said metal or said mixture, having it levitate and overheating it by at least 50°C above its melting point; and
opening the plug (6) to end the levitation and have said overheated molten metal or mixture flow into the rotating mould and fill the cavities thereof.

2. The method of claim 1, **characterized in that** the very reactive metal is titanium.

3. The method of claim 1 or 2, **characterized in that** the mould is of the lost wax mould type.

4. The method of any of claims 1 to 3, **characterized in that** the cast pieces are intended for orthopedic applications.

5. The method of claims 2, 3 and 4, **characterized in that** the titanium pieces are intended for dental applications.

6. A device for casting pieces of a very reactive metal or metal mixture, **characterized in that** it includes:
- inside of a vacuum chamber (15):
a cold induction-heated crucible (1), the bottom of which includes a removable sectorized plug (6), this crucible being designed to ensure the levitating of said metal or mixture in the molten state;
a mould arranged under the crucible;
means for rotating the mould;
- outside of the chamber:
a winding (13) arranged at the level of the low portion of the cold crucible and intended for heating said metal or said mixture by induction.

7. The device of claim 6, **characterized in that** the very reactive metal is titanium.

8. The device of claim 6 or 7, **characterized in that** the mould is of the lost wax mould type.

9. The device of any of claims 6 to 8, **characterized in that** the cast pieces are intended for orthopedic applications.

10. The device of claims 7, 8 and 9, **characterized in that** the titanium pieces are intended for dental applications.

## Patentansprüche

1. Verfahren zum Formgießen von Werkstücken aus einem Metall oder einem Gemisch von sehr reaktiven Metallen,
**dadurch gekennzeichnet, daß** das Verfahren die folgenden Verfahrensstufen bzw. -schritte umfaßt:
- in einen Vakuumbehälter (15) wird ein kalter Schmelztiegel (1) mit Induktionsheizung eingebracht, welcher das genannte Metall oder das genannte Gemisch enthält und dessen Boden einen herausnehmbaren sektorisierten Verschlußstopfen (6) aufweist, wobei der Schmelztiegel so ausgebildet ist, daß er die Versetzung des Metalls oder des Gemischs im geschmolzenen Zustand in Levitation gestattet;
- in dem Behälter wird unter dem kalten Schmelztiegel eine Gießform (20) eingebracht, welche zur Rotation um eine vertikale Achse (30) angetrieben werden kann;
- außerhalb des Behälters und auf der Höhe des Schmelztiegels und insbesondere des Schmelztiegelbodens wird eine Wicklung (13) zur Induktionsheizung angeordnet;
- die Wicklung (13) wird beaufschlagt, um das genannte Metall oder Gemisch aufzuschmelzen, es in Levitation zu versetzen und es auf wenigstens 50 °C über seinem Schmelzpunkt zu überhitzen; sowie
- der Verschlußstopfen (6) wird geöffnet, um die Levitation zu beenden und das genannte geschmolzene und überhitzte Metall oder Gemisch in die in Rotation befindliche Gießform zu gießen und die Formhohlräume auszufüllen.

2. Verfahren nach Anspruch 1,
**dadurch gekennzeichnet, daß** das sehr reaktive Metall Titan ist.

3. Verfahren nach Anspruch 1 oder 2,
**dadurch gekennzeichnet, daß** die Gießform eine Gießform vom Typ mit verlorener Wachsform ist.

4. Verfahren nach einem der Ansprüche 1 bis 3,
**dadurch gekennzeichnet, daß** die gegossenen Werkstücke für orthopädische Zwecke bestimmt sind.

5. Verfahren nach den Ansprüchen 2, 3 und 4,
**dadurch gekennzeichnet, daß** die Werkstücke aus Titan für Dental-Anwendungszwecke bestimmt sind.

6. Vorrichtung zum Formgießen von Werkstücken aus einem Metall oder einem Gemisch sehr reaktiver Metalle,
**dadurch gekennzeichnet, daß** sie umfaßt:
- im Inneren eines Vakuumbehälters (15):
- einen kalten Schmelztiegel mit Induktionsheizung (1), dessen Boden einen herausnehmbaren sektorisierten Verschlußstopfen (6) aufweist, wobei der Schmelztiegel so ausgebildet ist, daß er die Überführung des genannten Metalls oder Gemischs im geschmolzenen Zustand in Levitation gestattet,
- eine unter dem Schmelztiegel angeordnete Gießform,
- Mittel zum Rotationsantrieb der Gießform;
- außerhalb des Behälters:
- eine auf der Höhe des unteren Teils des kalten Schmelztiegels angeordnete Wicklung (13) zur Induktionserhitzung des genannten Metalls oder Gemischs.

7. Vorrichtung nach Anspruch 6,
**dadurch gekennzeichnet, daß** das sehr reaktive Metall Titan ist.

8. Vorrichtung nach Anspruch 6 oder 7,
**dadurch gekennzeichnet, daß** die Gießform eine Gießform vom Typ mit verlorener Wachsform ist.

9. Vorrichtung nach einem der Ansprüche 6 bis 8,
**dadurch gekennzeichnet, daß** die Formgußteile für orthopädische Zwecke bestimmt sind.

10. Vorrichtung nach den Ansprüchen 7, 8 und 9,
**dadurch gekennzeichnet, daß** die Werkstücke aus Titan für Dentalzwecke bestimmt sind.
